(19) Europäisches Patentamt
European Patent Office
Office européen des brevets

(11) **EP 3 710 509 B1**

(12) **EUROPEAN PATENT SPECIFICATION**

(45) Date of publication and mention of the grant of the patent:
**22.10.2025 Bulletin 2025/43**

(21) Application number: **18877884.9**

(22) Date of filing: **15.11.2018**

(51) International Patent Classification (IPC):
***C08G 63/16*** $^{(2006.01)}$ ***C08G 63/672*** $^{(2006.01)}$
***C08G 63/78*** $^{(2006.01)}$ ***C08G 63/85*** $^{(2006.01)}$

(52) Cooperative Patent Classification (CPC):
**C08G 63/672; C08G 63/16; C08G 63/78; C08G 63/85**

(86) International application number:
**PCT/PL2018/050058**

(87) International publication number:
**WO 2019/098865 (23.05.2019 Gazette 2019/21)**

# (54) THE METHOD FOR THE PREPARATION OF LOW AND/OR MEDIUM MOLECULAR WEIGHT POLYMERIC SURFACTANTS WITH A DEFINED HYDROPHILIC-LIPOPHILIC BALANCE

VERFAHREN ZUR HERSTELLUNG VON POLYMERTENSIDEN MIT NIEDRIGEM UND/ODER MITTLEREM MOLEKULARGEWICHT MIT EINEM DEFINIERTEN HYDROPHILEN-LILOPHILEN GLEICHGEWICHT

PROCÉDÉ DE PRÉPARATION DE TENSIOACTIFS POLYMÈRES DE POIDS MOLÉCULAIRE BAS ET/OU MOYEN POURVUS D’UN ÉQUILIBRE HYDROPHILE-LIPOPHILE DÉFINI

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.11.2017 PL 42345317**

(43) Date of publication of application:
**23.09.2020 Bulletin 2020/39**

(73) Proprietor: **PCC MCAA Sp. z o.o.**
**56-120 Brzeg Dolny (PL)**

(72) Inventors:
- **BARTMAN, Marcin**
  **50-540 Wroclaw (PL)**
- **SZCZEPANIAK, Paulina**
  **56-120 Brzeg Dolny (PL)**
- **WESOLOWSKA - PIETAK, Angelika**
  **54-062 Wroclaw (PL)**
- **BANKOWSKI, Bartosz**
  **53-238 Wroclaw (PL)**

(74) Representative: **AOMB Polska Sp. z.o.o.**
**ul. Rondo Ignacego Daszynskiego 1**
**00-843 Warsaw (PL)**

(56) References cited:
**CN-A- 101 747 499**
**CN-A- 106 188 513**
**CN-A- 106 519 201**
**PL-A1- 416 232**
**PL-A1- 416 232**
**US-B1- 6 423 376**

EP 3 710 509 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

The present invention relates to a method for the preparation of low- and/or medium-molecular weight polyether esters used primarily as polymeric surfactants.

In recent years, the level of demand for surfactants in various areas of industry, including food, cosmetics and pharmaceutical industries, has been constantly increasing. In this context, modern scientific research focuses on obtaining and studying surfactant compounds with a milder impact on the natural environment, less toxicity and corrosivity, more stable due to molecular structure and having better surface and biological properties.

Surface active agent (SAA) referred to as surfactants, tensides, detergents, have the ability to reduce the surface tension at the interface of various media.

Polymeric surfactants are particularly popular among other SAA, due to the possibility of strict control of their properties by selecting the type of components that make up the molecule and their quantitative contribution. The group of compounds called polymeric surfactants includes polyether esters (PEEs) called block copolymers. Polymeric surfactants differ in terms of chemical structure of individual blocks, which directly translates into their physical properties. In general, PEEs are made up of rigid segments, such as an aromatic ring and oligoether moieties, as well as flexible segments composed of, for example, polyethylene glycol (PEG) molecules. The consequence of this molecular structure is the observable difference in molecular mobility between the individual segments and has a direct effect on the properties of the plastic to which polymeric surfactants are added. For example, the presence of rigid segments in the polymer surfactant molecule limits its migration in the plastic.

US Patent No. 7,893,189 describes a method for the preparation of polyether esters from esters of mono- and/or polycarboxylic acids having at least one ether bond, by reacting an ester hydroxyl group with an alkylene oxide, e.g. ethylene oxide in the presence of double metal cyanide catalysts (DMC).

By acting with ethylene oxide on esters of higher fatty acids at elevated temperature and increased pressure, in the presence of DMC catalysts, alkoxylated ester derivatives are obtained with several ethoxy groups $(-CH_2-CH_2-O-)n$. The compounds obtained as a result of this process are considered to be excellent detergents due to their neutral, non-sensitizing effect on the skin.

The method according to the invention US 7 893 189 included the following steps:

1. The reaction of one or more of mono- or polycarboxylic acid esters containing one or more hydroxyl groups with one or more alkylene oxides, with ring-opening, to form corresponding monocarboxylic acid esters or esters of polycarboxylic acids containing one or more bound polyether chains, in which the addition of alkylene oxide is carried out in the presence of one or more diols and/or polyols and, optionally, one or more dicarboxylic esters;
2. Subjecting of products obtained in the first stage to one of the following reactions:

- Transesterification, to obtain the hydroxyl functional group of the polyether ester by reaction with one or more diols and/or polyols or, optionally, one or several diols of dicarboxylic acids or, optionally, derivatives of dicarboxylic acids;
- Transesterification with monocarboxylic and/or polycarboxylic acids esters containing a free hydroxyl group, leading to the formation of a polyether ester containing ester groups at the end of the chain;
- Saponification (hydrolysis), to obtain the corresponding mono- and polycarboxylic acids having a polyether linkage in the chain, followed by their esterification with optional addition of mono and/or polycarboxylic acids with free hydroxyl groups, leading to the formation of a polyether ester containing ester groups at the end of the chain.

US 4 268 410 presents a method for the preparation and use of surfactants as emulsifiers. SAAs are produced by the alkoxylation of fatty acid esters (palmitic, oleic, lauric) and hexitol. The surfactants according to the invention are prepared by combining the esterification and etherification processes. Surfactants of a very specific formula are prepared by alkoxylation of fatty acid ester and hexitol with a dibasic or a tribasic derivative of a carboxylic acid. The obtained SAAa shows a significantly higher viscosity in aqueous solutions (even more than 100 times) and in a mixture with other conventional surfactants than non-polymerized materials.

US 5 319 006 describes a process for the preparation of polyether ester resins in the reaction of a polyether with a cyclic anhydride, such as maleic anhydride, in the presence of a Lewis acid as a catalyst (e.g. zinc chloride, zinc bromide). The addition of vinyl monomer, e.g. styrene, to the obtained resin causes its curing.

US 5 436 314 discloses a method for the preparation of polyether esters from polyethers and dicarboxylic acids by random insertion of dicarboxylic acid molecule into a polyether backbone. The reaction is catalyzed by strong protic acids with a pKa value below 0. Polyether esters obtained according to the methods described in US 5 319 006 and US 5 436 314 have better performance compared to their counterparts obtained in a conventional manner - by esterification. However, a random method of addition of anhydride or acid to the polimer structure does not work at high temperatures for aromatic acids, such as isophthalic acid and terephthalic acid, due to their limited solubility in the reaction mixture at high

temperatures.

A two-step process for the production of polyether esters with a high content of aromatic ester units in their structure is disclosed in US 5 612 444. In the first step, a low molecular weight polyether polyol is reacted with an aromatic dicarboxylic acid, to form an intermediate polyester. The intermediate product thus obtained is reacted with dicarboxylic acid anhydride in the presence of Lewis acids as a catalyst. The obtained product contains from about 10 wt. % of repeating units derived from aromatic dicarboxylic acids. The obtained resins are cured by reaction with a vinyl monomer, e.g. styrene. The process works well in the case of isophthalic acid, however, due to the high melting point and poor solubility in organic solutions, terephthalic acid is not used in this method.

In turn, the subject of the invention described in EP 1 217 022 B1 is a method for the preparation of polyether ester resins consisting of repeating aromatic diester units. The process includes the reaction of an aromatic acid glycol ester with a polyether and a dicarboxylic acid at elevated temperature and in the presence of a Lewis acid catalyst. The invention relates to a method for the preparation of an unsaturated polyether ester resin consisting of repeating terephthalic units by reacting 2-methyl-1,3-propanediol and terephthalic acid, a polyether polyol having an average hydroxyl functionality of from 2 to 6 and a number average molecular weight of 400-12000, and an unsaturated cyclic anhydride, in the presence of a protic acid with a pKa of less than 0 as a catalyst, and at a reaction temperature of 150-250 °C.

US 5 145 883 discloses a method for the preparation of polyether ester polyols having polycarboxylic acid moieties by reacting a polyether polyol having a hydroxyl value of at most 400, a polycarboxylic anhydride and monoepoxide, and also in the presence of double metal cyanide catalysts.

US 7 893 189 discloses a method for the preparation of poly(ether-ester) polyols having a block structure by reacting esters of mono- or polycarboxylic acids with one or more polyether polyols. These compounds are used for the preparation of polyurethane materials with advantageous properties, such as: resistance to hydrolysis, low viscosity, high abrasion and solvent resistance, and tensile strength.

In turn, the subject of the invention described in PL 216179 is a method for obtaining dioctyl terephthalate at a temperature of at least 170 °C by the esterification reaction of terephthalic acid with isooctanol, catalyzed by organometallic compounds composed of metal ions, such as Ti and/or Zr and/or Sb and/or Sn, and alkoxy OR groups having a linear or branched structure and a number of carbon atoms of not less than 4, preferably 7 to 10, characterized in that the molar ratio of compounds containing OH groups to compounds with OR groups do not exceed 0.2. It is claimed that in the final esterification step, when the product concentration in the reaction mixture exceeds 50% and after stopping the dosing of terephthalic acid, the concentration of the organometallic catalyst is increased by addition of solution containing only alkoxides of Ti and/or Zr and/or Sb metals and/or Sn in octanol to the reaction mixture, to obtain a clear solution of dioctyl terephthalate in octanol and reduction of the free acid content to a level not higher than 0.02 mg KOH/g. The concentration of the organometallic catalyst during dosing of terephthalic acid, based on the metal content, is maintained at a level not lower than 25 ppm, while after dosing of terephthalic acid, the total catalyst concentration in the solution is increased to 30 ppm based on the metal content. The esterification is carried out in an inert gas stream in order to dehydrate the reaction mixture, so that the water concentration in the initial esterification stage is not higher than 0.15% and in its final phase not higher than 0.10%. The esterification product is separated from the reaction mixture by decomposition of the catalyst with water in a basic medium, and then by separation of degradation products and distillation of an excess amount of alcohol, the crude product is filtered with the addition of sorbents.

A method for the preparation of bis(2-ethylhexyl) terephthalate, described in patent PL 220664, which is used as plasticizer for plastics, is known. It is noted that esters of terephthalic acid and aliphatic alcohols, in particular 2-ethylhexyl alcohol due to its plasticizing properties, are intermediates used in plastics processing. The esterification of terephthalic acid with 2-ethylhexyl alcohol is carried out in the presence of an acid catalyst added to terephthalic acid in a ratio of 7 to 20 wt. %, preferably this catalyst is *para*-toluene sulfonic acid at a concentration of 30 to 75%, added once at the beginning of the synthesis or in portions during the synthesis. The esterification is carried out at a temperature of 125 °C to 155 °C, but not higher than 170 °C, under pressure reduced to 20mm Hg and with inert gas flow, most preferably nitrogen, with continuous removal of water formed during the reaction. It is claimed, that 2-ethylhexyl alcohol is added in a 60% excess relative to its stoichiometric amount. In the synthesis method described in PL 220664 B1, the neutralization of reaction mixture is carried out using aqueous solutions of bicarbonates, carbonates, sodium or potassium hydroxides, or mixtures thereof, used at a concentration of 5 to 10%. In addition, sorbents such as activated carbon or diatomaceous earth are used for discoloration of the final ester, and bis(2-ethylhexyl) terephthalate is washed with demineralised water, and after the esterification the remaining 2-ethylhexyl alcohol is removed by vacuum distillation and/or by steam distillation.

PL416232A1 discloses a process for preparing low molecular weight polyesters by esterification of dicarboxylic acids with alcohols, and comprising: dissolving a dicarboxylic acid in solution having mono and dihydroxy alcohols; then removing water from the resulting solution; adding organic tin compounds and/or titanium to the dehydrated solution; introducing dicarboxylic acids and/or polyesters into the reaction mixture; then adding anhydrous substituted monohydroxy alcohols (I) in excess and carrying out the esterification; and cooling the resulting polyester mixture and contacting with an adsorbent after which suspension is subjected to filtration.

The object of the present invention is to develop a method for the preparation of low- and/or medium-molecular

weight polymer surfactants (also called polyether esters) with a defined hydrophilic-lipophilic balance (HLB index) based on the efficient use of esterification and/or transesterification processes.

Conducting industrial synthesis of polyether ethers by known methods using the available installations is associated with significant problems. The critical parameter is the quality of raw materials used for the synthesis, in particular the presence of impurities in the form of, for example, water, sugars, hydroxycarboxylic acids, aldehydes, etc. A particularly undesirable phenomenon is the deactivation of organometallic catalysts under the influence of water in the reaction mixture at > 0.1 wt. %. Therefore, it is a particular object of the invention to maintain the viability of the organometallic catalyst used throughout the entire synthesis process at the same level.

Another object of the invention is to control the growth of the polymeric chain and to obtain the product with the least degree of polydispersity.

Another problem present in the industrial synthesis of polyether ethers is the variability of physicochemical properties of substrates under the influence of temperature. Some raw materials or products may decompose under the influence of too high process temperature (e.g. thermal decomposition of citric acid). There may also be unwanted sublimation of raw materials or products (e.g. sublimation of trimellitic anhydride - its crystallization in the distillation column, condenser, etc.). An undesirable phenomenon that increases when the temperature rises is the gathering of autocatalytic properties of high pKa carboxylic acids.

The above objects have been unexpectedly achieved in the synthesis method according to the invention.

The subject of the invention is a method for the preparation of low- and/or medium molecular weight polymeric surfactants with a defined hydrophilic-lipophilic balance (HLB index), based on the efficient use of esterification and/or transesterification of organic esters and/or organic acids with organic alcohols, characterized by that at least one organic ester AE1 and/or organic acid A1 is mixed at a temperature not lower than 60°C in a solution containing organic alcohols AL1, which contain no more than six hydroxyl groups in their structure, wherein an amount of organic esters AE1 is no more than 90% by weight and an amount of organic alcohols AL1 containing at least 2 hydroxyl groups is no more than 90% by weight, then the temperature of the reaction mixture is raised to not less than 100 °C and the reaction mixture is continuously contacted with a heterogeneous catalyst of an ion exchange type, where the esterification and/or transesterification process takes place and the water formed in the reaction is continuously removed until its concentration in the solution is no more than 0.05% by weight, then an organic tin compound and/or an organic titanium compound and/or an organic zinc compound is added to the reaction mixture as a catalyst for the esterification and/or transesterification reaction, and the temperature of the reaction mixture is increased to not less than 150 °C and the water formed in the reaction is continuously removed and/or alcohol in an amount of no more than 90% molar of alcohol introduced within the structure of organic esters AE1, after which an organic ester BE1 and/or organic acid B1 and/or organic alcohol BL1 are loaded into the reaction mixture at a temperature not higher than 210 °C and an alcohol is continuously removed in an amount of no more than 90% molar of alcohol introduced within the structure organic esters BE1 and/or water formed in the reaction is removed until the acid value of the reaction mixture reaches no more than 0.5 mg KOH/g, after which the reaction mixture is cooled and, at a temperature not higher than 150 °C, demineralized water is loaded into the system in an amount not higher than 0,5% by mass of the entire reaction mixture, after which obtained mixture of low and medium-molecular surfactants is cooled to a temperature not lower than 60 °C and contacted with a mixture of adsorbents consisting of activated carbon and/or bentonite and/or diatomaceous earth and/or a cationic ion exchange resin and/or anionic ion exchange resin, after which the suspension is subjected to a filtration process.

The synthesis of polyether esters of the invention proceeds according to the following scheme:

Step I

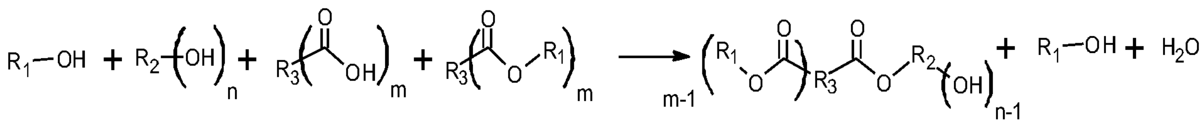

AL1 A1 AE1

wherein:

n ε (2 - 6)
m ε (2 - 3)

Step II

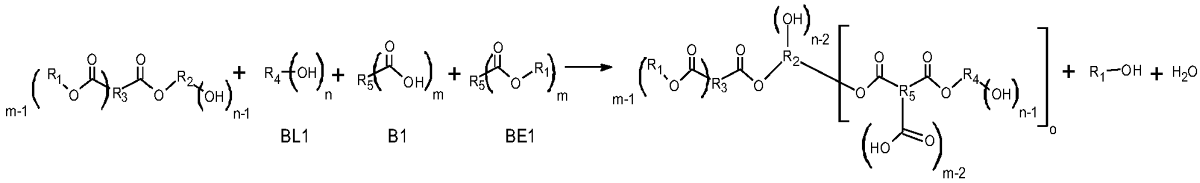

wherein:

n ε (2 - 6)
m ε (2 - 3)
o ε (1,2,3,4,etc.)

The essence of the method of obtaining low- and medium-molecular polymer surfactants in the reaction of esterification and/or transesterification of organic alcohols with organic esters and/or with organic acids is that in the first step at least one organic ester AE1 and/or organic acid A1 is mixed at a temperature not lower than 60°C in a solution containing organic alcohols AL1 containing no more than six hydroxyl groups, wherein an amount of organic esters AE1 is no more than 90% by weight and an amount of organic alcohols AL1 containing at least 2 hydroxyl groups is no more than 90% by weight, then the temperature of the reaction mixture is raised to not less than 100 °C and the reaction mixture is continuously contacted with a heterogeneous catalyst of an ion exchange type, where the esterification and/or transesterification process takes place and water formed in the reaction is continuously removed until its evolution is ceased, then an organic tin compound and/or an organic titanium compound and/or an organic zinc compound is added to the reaction mixture as a catalyst for the esterification and/or transesterification reaction, and the temperature of the reaction mixture is increased to not less than 150 °C and water formed in the reaction is continuously removed and/or alcohol in an amount of no more than 90% molar of the alcohol introduced within the structure of organic esters AE1, after which an organic ester BE1 and/or organic acid B1 and/or organic alcohol BL1 are loaded into the reaction mixture at a temperature not higher than 210 °C and an alcohol is continuously removed in an amount of no more than 90% molar of alcohol introduced within the structure of organic esters BE1 and/or water formed in the reaction is removed until the acid value of the reaction mixture reaches no more than 0.5 mg KOH/g, after which the reaction mixture is cooled and, at a temperature not higher than 150 °C, demineralized water is loaded into the system in an amount not higher than 0,5% by mass of the entire reaction mixture, after which obtained mixture of low and medium-molecular surfactants is cooled to a temperature not lower than 60 °C and contacted with a mixture of adsorbents consisting of activated carbon and/or bentonite and/or diatomaceous earth and/or a cationic ion exchange resin and/or anionic ion exchange resin, after which the suspension is subjected to a filtration process.

Preferably, esters of aliphatic and/or aromatic and/or monohydroxyaliphatic acids containing no more than three carboxylic groups with alcohols containing only one hydroxyl group of the R-OH type are used as the organic esters AE1, wherein R is an alkyl substituent containing from 4 to 20 carbon atoms.

Preferably, aliphatic and/or aromatic and/or mono hydroxyaliphatic acids containing no more than three carboxylic acid groups are used as the organic acids A1.

Preferably, organic alcohols containing no more than six hydroxyl groups are used as organic alcohols.

In some embodiments, polyethers which contain at least one ether linkage (-C-O-C-) and/or at least two hydroxyl groups (-OH) and their average molecular weight ($M_w$) is not higher than 3000g/mol are used as organic alcohols AL1.

Preferably, esters of aliphatic and/or aromatic acids containing no more than three carboxylic acid groups with alcohols containing only one hydroxyl group of the R-OH type are used as the organic esters BE1, wherein R is an alkyl substituent containing from 2 to 20 carbon atoms.

Preferably, aliphatic and/or aromatic and/or monohydroxyaliphatic acids containing no more than three carboxylic groups are used as an organic acids B1.

Preferably, organic compounds containing at least one hydroxyl group are used as organic alcohols BL1.

In some embodiments, polyethers which contain at least one ether linkage (-C-O-C-) and/or at least two hydroxyl groups (-OH) and their average molecular weight ($M_w$) is not higher than 3000 g/mol are used as organic alcohols BL1.

In some embodiments, low molecular weight polymeric esters that contain at least two ester bonds (-CO-O-C) and at least one hydroxyl group (-OH) and their average molecular weight ($M_w$) is not higher than 3,000 g/mol are used as organic alcohols BL1.

Preferably, the organic alcohols AL1 are mixed with organic esters AE1 in molar proportions of hydroxyl groups (-OH) to ester groups (-CO-O-C-) from 1:1 to 1:5, preferably from 1:2 to 1:4, and/or with organic acids A1 in molar proportions of carboxylic groups (-CO-OH) to hydroxyl groups (-OH) from 1:2 to 1:6, preferably from 1:3 to 1:5.

Preferably, the organic esters BE1 are added to the reaction mixture in an amount of no more than 2.5 moles per 1 mole of organic esters AE1.

Preferably, at least one organic acid B1 and/or an organic alcohol BL1 in an amount of no more than 2.0 moles per 1 mole of organic esters of AE1 are added to the reaction mixture at a temperature not higher than 210 °C, preferably 160 °C to 190 °C.

Preferably, water and/or alcohol(s) formed in the reaction are removed continuously from the reaction zone by distillation under reduced pressure and/or by distillation at normal pressure with nitrogen bubbling.

In some embodiments, a macroporous, strong cationic ion exchange resin containing sulfone groups supported on a polymer matrix having a minimum concentration of sulfone groups in the range of 0.5 eq/dm$^3$ - 2.0 eq/dm$^3$, preferably 0.8 eq/dm$^3$ - 1.0 eq/dm$^3$, and an average pore diameter in the range 160 Å - 300 Å, preferably 190 Å - 240 Å, are used as a heterogeneous catalyst.

Preferably, an organic tetravalent tin ($Sn^{4+}$) compound containing at least one alkoxy group ($R_1$-O-) is used as a homogeneous catalyst for the esterification and/or transesterification reaction, wherein $R_1$ is an alkyl substituent containing from 4 to 8 carbon atoms, preferably 8 carbon atoms.

Preferably, an organic titanium compound containing no more than four alkenyl groups ($R_1$-O-) is used as a homogeneous catalyst for the esterification and/or transesterification reaction, wherein $R_1$ is an alkyl substituent containing from 3 to 4 carbon atoms, preferably 4 carbon atoms.

Preferably, an organic divalent zinc compound ($Zn^{2+}$) containing at least one carboxyl group (-OOR$_1$) is used as a homogeneous catalyst for the esterification and/or transesterification reaction, wherein $R_1$ is an alkyl substituent containing from 2 to 12 carbon atoms.

Preferably, the demineralized water is added to the reaction mixture in an amount of no more than 0.50% by weight, at a temperature not higher than 210 °C, preferably from 120 °C to 180 °C.

Preferably, the adsorbent mixture is used in an amount of no more than 2.0% w/w relative to a mixture of low- and/or medium-molecular polymeric surfactants, preferably from 0.4 % w/w to 1.0 % w/w.

Preferably, the adsorbent contains at least 30% w/w of anionic ion-exchange resin, and/or 5.0% w/w of cationic ion-exchange resin, and 5.0% w/w of activated carbon and/or bentonite, and 20.0 % w/w of diatomaceous earth.

Description of particularly preferred embodiments of the invention

The organic ester AE1, which may be: an ester containing one ester bond (-CO-O-) (such as: n-butyl butyrate, 2-ethylhexyl 2-ethylhexaninate, 2-ethylhexyl stearate, cetyl palmitate and others), an ester containing two ester bonds (-CO-O-) (such as: bis(2-ethylhexyl) malonate, bis(2-ethylhexyl) maleate, bis(2-ethylhexyl) succinate, bis(2-ethylhexyl) adipate, bis(2-ethylhexyl) sebacate), bis(2-ethylhexyl) terephthalate, dilauryl malonate, and others), an ester containing three ester bonds (-CO-O-) (such as tris-n-butyl citrate, acetyl tris-n-butyl citrate, tris(2-ethylhexyl) citrate, acetyl tris(2-ethylhexyl) citrate, tris(2-ethylhexyl) trimellitate, triisononyl trimellitate and others) together with/or carboxylic acid A1, which may be: aliphatic acid (such as malonic, maleic, butyric, succinic, adipic, 2-ethylhexanoic, sebacic, stearic acid and others), an aromatic acid (such as benzoic, terephthalic, trimellitic acid and others), monohydroxyaliphatic acid (such as glycolic, citric acid and others), mixed at a temperature not lower than 60 °C with a solution of organic alcohols AL1 containing no more than six hydroxyl groups, wherein an amout of organic esters AE1 is no more than 90% by weight and an amount of organic alcohols AL1 containing at least 2 hydroxyl groups is no more than 90% by weight.

The molar ratio of hydroxyl groups (-OH) to ester groups (-CO-O-) may be from 1:1 to 1:5, preferably from 1:3 to 1:4. However, the molar ratio of carboxyl groups (-CO-OH) to hydroxyl groups (-OH) should be from 1:2 to 1:6, preferably from 1: 3 to 1: 5.

The reaction mixture is circulated through a solid bed of a heterogeneous ion exchange resin catalyst. Water formed in the reaction is continuously removed from the reaction mixture by continuous distillation under reduced pressure, assisted by the nitrogen introduced into the reaction node. Contacting the reaction mixture with the heterogeneous catalyst bed continues until the evolution of water ceases.

It is necessary to dehydrate the reaction mixture so that the concentration of water in the reaction solution is at most 0.05% by weight. Almost complete removal of water is necessary due to the need to maintain the full activity of homogeneous catalysts in the reaction environment and to eliminate the phenomenon of the deactivation of organometallic catalysts under its influence. A catalyst for the synthesis process is introduced into the dehydrated reaction mixture, wherein the catalyst is: an organic tetravalent tin compound ($Sn^{4+}$), wherein it contains at least one alkosyl group ($R_1$-O-), wherein $R_1$ is an alkyl substituent containing from 4 to 8 carbon atoms, and/or an organic tetravalent titanium compound ($Ti^{4+}$) containing no more than four alkoxy groups ($R_1$-O-), wherein $R_1$ is an alkyl substituent containing from 3 to 4 carbon atoms, preferably 4 carbon atoms, and/or an organic divalent zinc compound ($Zn^{2+}$) containing at least one carboxylic group (-OOR$_1$), wherein $R_1$ is an alkyl substituent containing from 2 to 12 carbon atoms.

After the evolution of water from the reaction system is complete, the reaction mixture is heated to at least 170 °C and the organic ester BE1 is introduced into the system, which may be an ester containing one ester bond (-CO-O-) (such as: n-butyl butyrate, 2-ethylhexyl 2-ethylhexaninate, 2-ethylhexyl stearate, cetyl palmitate and others), an ester containing two ester bonds (-CO-O-) (such as: bis(2-ethylhexyl) malonate, bis(2-ethylhexyl) maleate, bis(2-ethylhexyl) succinate,

bis(2-ethylhexyl) adipate, bis(2-ethylhexyl) sebacate), bis(2-ethylhexyl) terephthalate, dilauryl malonate, and others), an ester containing three ester bonds (-CO-O-) (such as tris-n-butyl citrate, tris(2-ethylhexyl) citrate, tris(2-ethylhexyl) trimellitate, triisononyl trimellitate and others), and/or carboxylic acid A1, which may be: aliphatic acid (such as malonic, butyric, succinic, adipic, 2-ethylhexanoic, sebacic, stearic acid and others), aromatic acid (such as benzoic, terephthalic, trimellitic acid and others), and/or an organic alcohol BL1, which must contain at least one hydroxyl group (-OH), preferably polyethers that contain at least one ether linkage (-COC-) and at least two hydroxyl groups (-OH) and their average molecular weight ($M_w$) is not higher than 3000 g/mol and/or low molecular weight polymer esters that contain at least two ester bonds (-CO-O-C) and at least one hydroxyl group (-OH) and their average molecular weight ($M_w$ ) is not higher than 3,000 g/mol and alcohol is continuously removed from the reaction system by continuous distillation under reduced pressure, assisted by the nitrogen introduced into the reaction node, in an amount not exceeding 90% mole of alcohol introduced within the structure of organic ester BE1 and/or water formed in the reaction is removed until the acid value of the reaction mixture is not higher than 0.5 mg KOH/g. Organic esters BE1 are added to the reaction mixture in an amount not higher than 2.5 moles per 1 mole of organic esters AE1. The organic acid B1 and/or the organic alcohol BL1 is added in an amount not higher than 2.0 moles per 1 mole of organic esters AE1.

After completion of the esterification and/or transesterification processes, the reaction solution is cooled and demineralised water added to it in an amount not higher than 0.5% by weight of the reaction mixture. The reaction mixture is cooled to a temperature not lower than 60 °C and is contacted with a mixture of adsorbents consisting of activated carbon and/or bentonite and diatomaceous earth and anionic ion exchange resin and/or cationic ion exchange resin, wherein the amount of the adsorbent mixture is not higher than 2,00% w/w based on the weight of the mixture of low- and/or medium molecular weight polymeric surfactants. It is necessary to add such an amount of adsorbent mixture so that the final reaction mixture does not contain water and/or acidic compounds. The complete removal of these elements guarantees that at the stage of separating low- and/or medium-molecular polymer surfactants from the concentrated reaction mixture no by-products will be generated that can significantly affect the quality of the final product.

Advantages of the invention

The method of synthesis of polymer surfactants, which is the subject of the present invention, allows to obtain a compound with desired and theoretically predictable properties. Based on the determined mass ratio of hydrophilic moieties found in the polymer surfactant chain to the total molecular weight of the polymer surfactant, i.e. the HLB value corresponding to the hydrophilic-lipophilic balance of the molecule, it is possible to design the properties of polymeric surfactants. The HLB index is expressed as the product of the value of 20 and quotient of the molecular weight of hydrophilic part of the analyzed molecule to the total mass of the analyzed molecule.

$$HLB = 20 \text{ x } \frac{Mh}{Mcz}$$

With an increase in the HLB index value (up to a maximum of 20), i.e. the increased molecular weight of the hydrophilic part of the polymer surfactant composed of poly(oxyethylene) group, hydroxyl groups, ether groups, halogen-derived atoms, amine groups, its hydrophilicity increases. However, in the opposite case, when the contribution of the molecular weight of the hydrophilic part to the polymer surfactant molecule decreases, the value of the HLB parameter decreases, which means an increase in its hydrophobic properties and a change in the applications of the final products. The relationship between properties and applications of surfactants and the HLB index is described in the table below.

Table 1. Relationship between the HLB index value and the final use of a surfactant.

| | HLB value | SAA application |
|---|---|---|
| hydrophilicity ↓ | 1,5 – 3 | Anti-foaming agents |
| | 3 – 6 | W/O emulsifiers |
| | 7 – 9 | Wetting and coating agents |
| | 8 – 18 | O/W emulsifiers |
| | 13 – 16 | Detergents |
| | 15 – 18 | Solubilizers |

According to the invention, it is possible to efficiently carry out the esterification and/or transesterification processes in an integrated multifunctional reaction node using cation exchange resins and/or organic titanium and/or zinc

and/or tin compounds and it is possible to select the parameters of the processes suitable for obtaining a surfactant with a defined hydrophilic-lipophilic balance.

In addition, the synthesis method carried out in accordance with the invention is free from the disadvantages described above and allows to achieve the above-mentioned purposes. An important advantage of the present method is the achieved insensitivity of the heterogeneous catalyst to the amount of water contained in the reaction mixture.

In addition, the low temperature of the process in the first stage of the synthesis avoids the decomposition of organic compounds such as sugars, hydroxy acids and unfavorable condensation of aldehydes.

The possibility of heterogeneous catalyst to work in conditions of different process temperatures from 80 °C to 200 °C was also achieved.

In addition, an increase in the efficiency of the esterification and transesterification process was achieved by the use of a bimodal reaction system, by controlling the rate of drying of the reaction mixture from water and isolating excess amount of monohydroxy alcohol from reaction mixture.

For a better explanation of the essence of the present invention, specific examples of its implementation are presented below.

In addition, Fig. 1 shows a schematic diagram of a model reaction system for the synthesis of low- and/or medium-molecular polymer surfactants.

**Examples**

The synthesis method of low- and/or medium molecular weight polymeric surfactants is performed on the reaction node module shown in Fig. 1, composed of the following elements:

1. A jacketed stirred 5 $dm^3$-tank reactor equipped with a mechanical stirrer, temperature regulation in the range of 25 °C - 250°C, and nitrogen gas bubbling with a nitrogen flow rate in the range of 1 $Ndm^3/h$ - 30 $Ndm^3/h$,
2. A jacketed 2 $dm^3$-flow reactor equipped with temperature regulation in the range of 25°C - 250°C and regulation of liquid flow through the reactor in the range of 0.5 $dm^3/h$ - 10 $dm^3/h$,
3. A distillation column equipped with external two-zone electric heating, ensuring effective distillation of water and/or alcohol,
4. Circulation pump with work capacity in the range of 0.5 $dm^3/h$ - 20 $dm^3/h$,
5. Bulk material dispenser,
6. Liquid material dispenser,
7. Fume condenser,
8. Fume separator,
9. Phase separator,
10. Vacuum pump,
11. Operating tank for water formed in the reaction,
12. Operating tank for alcohol,
13. Operating tank for alcohol.

A mixture of organic alcohols AL1 consisting of a monohydroxy alcohol and an alcohol containing no more than six hydroxyl groups is fed to the liquid material dispenser (6) and is entirely dispensed into the jacketed stirred tank reactor (1). After filling the reactor (1), a mechanical stirrer and heating jacket are activated. During the heating of the alcohol mixture in the reactor (1), the vacuum pump (10) is activated, creating a negative pressure in the reaction vessel, and the refrigerant flow through the condenser of the vapor (8) and the vapor separator (9) are activated. When the temperature of the alcohol mixture in the reactor reaches a temperature of 60 °C - 70 °C, the organic ester AE1 is dosed from the liquid material dispenser (6), and the organic acid A1 is dosed from the bulk material dispenser (5). The dosing rate of both the ester AE1 and the acid A1 is adapted to the rate of dissolution of the acid A1 in the solution produced in the jacketed stirred tank reactor (1). During the dosing of individual reagents, zone heating is started in the distillation column (3) and in the jacketed flow reactor (2) to heat the ion exchange resin contained therein, which is a heterogeneous catalyst for the esterification and/or transesterification process. After the introduction of the entire amount of ester AE1 and acid A1 and complete homogenization of the reaction mixture, a circulating pump (4) is activated between the jacketed stirred tank reactor (1) and the jacketed flow reactor (2). Circulation of the mixture between the two reactors is maintained in the range of 4.0 $dm^3/h$ - 12.0 $dm^3/h$, and the temperature in the reaction node is set in the range 100.0 °C - 130.0 °C, the rotation of the mechanical stirrer is set in the range of 15.0 rad/s - 21.0 rad/s, constant pressure is set in the range of 350.0 mmHg - 600.00 mmHg and bubbling nitrogen in the reactor (1) is set in the range of 5 $Ndm^3/h$ - 15 $Ndm^3/h$.

Along with the establishment of process parameters, two simultaneous processes take place in the reaction system. In a jacketed flow reactor (2) filled with an ion exchange resin, the esterification and/or transesterification process of the reaction mixture takes place, and in the stirred tank reactor (1) distillation under reduced pressure takes place, with

nitrogen bubbling to ensure a continuous process of removing water formed in the flow reactor (2). The water vapor leaves the reaction system along with the vapors of alcohols AL1 and/or alcohols, which are directed to the distillation column (3). In the distillation column, process of separation of water-monohydroxyl alcohol AL1 azeotrope from alcohols takes place. The azeotropic vapors are condensed in the condenser (7) and in the vapor separator (8) from where they are directed to the phase separator (9). The organic phase overflow from the phase separator (9) is returned to the top of the distillation column (3), whereas the aqueous phase flows to the reaction tank into the reaction water (11).

The water content in the reaction system and the acid value of the reaction mixture are controlled during the esterification and/or transesterification process in the reaction system. After reaching the required concentration of water in the reaction mixture at level <0.05% w/w, the dosing of the homogeneous catalyst for the esterification and/or transesterification processes is started. The homogeneous catalyst is introduced into the system in the form of a liquid homo- and/or heterogeneous solution by a liquid material dispenser (6) while raising the temperature of the reaction solution to 170 °C - 190 °C and reducing the pressure to not less than 150.0 mmHg, to ensure continuity of distillation process of low boiling components of the reaction mixture from the stirred tank reactor (1). During the stabilization of the temperature of the reaction solution, organic ester BE1 and/or organic alcohol BL1 and/or organic acid B1 are introduced to the bulk (5) and liquid material (6) feeders.

The choice of organic ester BE1 and/or organic alcohol BL1 and/or organic acid B1 depends on the designed hydrophilic-lipophilic balance (HLB index calculated using the Griffin method) and the hydroxyl value for synthesized low- and/or medium-molecular polymer surfactants. Then, after the temperature of the reaction solution has stabilized and the catalyst slurry has completely dissolved, the organic ester BE1 and/or the organic alcohol BL1 and/or the organic acid B1 are dosed from the bulk material feeders (5) and liquid material feeders (6). The growth behavior of the polymer chains of surface-active compounds is controlled by determining the average molecular weight of the reaction mixture and/or the acid number and/or the water content.

The synthesis of low- and/or medium molecular weight polymeric surfactants is continued until alcohol is removed in an amount not greater than 90% mole of the alcohol introduced in the organic structure BE1 and/or until the acid value of the reaction mixture is not higher than 0.5 mg KOH/g. After the synthesis of low- and/or medium-molecular polymer surfactants, the temperature of the stirred tank reactor (1) is decreased and demineralized water is dispensed in the amount of no more than 0.5% by mass of the liquid mixture by the liquid material dispenser (5). The post-reaction mixture is cooled to a temperature not lower than 60 °C, and then using bulk material feeder (6) an adsorbent mixture consisting of activated carbon and/or bentonite and diatomaceous earth and anionic ion exchange resin and/or cationic ion exchange resin is introduced in an amount not larger than 2.0% w/w based on a mixture of low- and/or medium-molecular weight surfactants. The contacting process of the reaction mixture with the adsorbent mixture is carried out for 1.0 h - 6.0 h at a temperature of 60°C - 90°C and under a nitrogen blow from 1 $Ndm^3/h$ - 5 $Ndm^3/h$, while still having a mixture of adsorbents uniformly suspended in a solution of crude polymeric surface-active compounds in a stirred tank reactor (1). After completion of the contacting process, the synthesis product is filtered at 60 °C - 90 °C under nitrogen pressure of 0.30 MPa - 10.0 MPa using a pressure filter.

## Example 1

1.0 $dm^3$ of the heterophase catalyst in the form of a strongly acidic ion exchange resin (Amberlyst A46) is placed in a flow reactor. 800.0 g of PEG400, 130.0 g of 2-ethylhexanol are introduced into the stirred tank, the mechanical stirrer and jacket heating of the stirred tank reactor are started, the vacuum pump is activated, which produces a vacuum of 400 mmHg, the 15 °C water flow is started through the condenser and the bubbling of the reaction solution with nitrogen in an amount of 5.0 $Ndm^3/h$ is started. When the temperature in the stirred tank reaches 60 °C, dosing of 342.0 g of bis(2-ethylhexyl) succinate and 59.0 g of succinic acid commences. During the dosing of the remaining components of the reaction mixture, the electric heating of the distillation column and the jacket heating of the flow reactor are activated.

After the whole ester and acid has been dispensed and completely dissolved and the temperature of 120 °C is reached by the reaction solution, the distillation process under pressure of 400.0 mmHg begins. The water and alcohol vapors leave reactor and move to the distillation column. The vapors of azeotrophes and alcohols condense in the condenser and separator and are then directed to the separator. The dehydrated alcohols overflow from the separator is directed to the distillation column and the water is stored in a suitable operating tank. After stabilization of the distillation process, a circulation pump is started, which ensures a constant flow of the reaction mixture through the heterophasic catalyst bed in the amount of 5.0 $dm^3/h$ and conducts the esterification and trans-esterification process while removing water and alcohol from the reaction zone.

The temperature of reactor is maintained at 120 °C, the speed of the stirrer is maintained in the range of 17.0 rad/s, pressure is maintained constant at 400.0 mmHg, nitrogen flow is maintained at 5.0 $Ndm^3/h$. The condensed water and alcohol are collected in appropriate containers. After reaching a demanding concentration of water (0.04% w/w) and determination of the acid value (1.5 mg KOH/g), homogeneous catalyst dosing into the synthesis system in an amount of 20.0 g begins, which is a 5.0% solution of dioctyltin oxide in 2-ethylhexanol. After the homophasic catalyst has been

dispensed, the temperature of the reaction mixture is raised to 180 °C and the pressure is reduced to 125.0 mmHg.

When increasing the temperature of the reaction mixture, 73.0 g of adipic acid, 370.0 g of bis(2-ethylhexyl) adipate and 400.0 g of PEG 400 are dosed into the reaction system. The esterification process ends when the reaction solution reaches the acid value of 0.2 mg KOH/g and water content of 0.02% w/w. The transesterification process ends when 185.0 g of 2-ethylhexanol are recovered from the reaction solution. At the time of collection of 90% of the scheduled amount of separated 2-ethylhexanol, the reaction mixture is cooled. At 115 °C, 8.0 g of demineralised water are dosed to a stirred tank reactor to complete the synthesis of low and/or medium molecular polymer surfactants. When the post-reaction mixture is cooled to 85 °C, 10.0 g of the adsorbent mixture consisting of 2.5 g of active carbon, 4.5 g of diatomaceous earth, 3.0 g of basic Amberlyst A26OH ion exchange resin are dosed. The contacting process is carried out for 4 hours at 85 °C under a nitrogen bubbling at 3 $Ndm^3/h$, keeping the slurry suspended evenly in the working space of the reactor. After the refining process of polymer surfactants, the product is filtered at 90 °C under 1 MPa nitrogen pressure.

A clear product with the characteristics described in Table 2 is obtained.

## Example 2

The synthesis of low- and/or medium molecular weight polymeric surfactants is carried out as in Example 1 except that 390 g of bis(2-ethylhexyl) terephthalate is used in the first stage instead of bis(2-ethylhexyl) succinate, and tetra-n-butyl titanate is used as a homophase catalyst, and in the second stage 390 g of bis(2-ethylhexyl) terephthalate is used instead of bis(2-ethylhexyl) adipate, and 14.0 g of the adsorbent mixture consisting of 4.2 g of activated carbon, 5.6 g of diatomaceous earth and 4.2 g of Amberlyst A26OH basic ion exchange resin is used. The esterification process ends when the reaction solution reaches an acid value of 0.1 mg KOH/g and a water content of 0.02% w/w. The transesterification process ends when 201.5 g of 2-ethylhexanol is recovered from the reaction solution.

A clear product with the characteristics described in Table 2 is obtained.

## Example 3

The synthesis of low- and/or medium-molecular polymeric surfactants is carried out as in Example 1 except that in the first stage 180.0 g of butane-1,4-diol is used instead of PEG400, 370.0 g of bis(2-ethylhexyl) adipate is used instead of bis(2-ethylhexyl) succinate, 151.5 g of sebacic acid is used instead of succinic acid and Amberlyst A70 is used as the heterophasic catalyst, and in the second step 151.5 g of sebacic acid is used instead of adipic acid. The esterification process ends when the reaction solution reaches an acid value of 0.2 mg KOH/g and a water content of 0.03% w/w. The transesterification process ends when 130.0 g of 2-ethylhexanol is recovered from the reaction solution.

A clear product with the characteristics described in Table 2 is obtained.

## Example 4

The synthesis of low- and/or medium-molecular polymeric surfactants is carried out as in Example 1 except that in the first stage 124.0 g of ethylene glycol is used instead of PEG400, 546.0 g of bis(2-ethylhexyl) trimellitate is used instead of bis(2-ethylhexyl) succinate, 166.0 g of terephthalic acid is used instead of succinic acid, Amberlyst A70 is used as heterophasic catalyst, and in the second stage 390.0 g of bis(2-ethylhexyl) terephthalate is used instead of bis(2-ethylhexyl) adipate, 1500,0 g of PEG 1500 is used instead of PEG400 and no adipic acid is used, and 17.0 g of the adsorbent mixture consisting of 3.4 g of activated carbon, 8.5 g of diatomaceous earth and 5.1 g of Amberlyst A-21 basic ion exchange resin is used. The esterification process ends when the reaction solution reaches an acid value of 0.25 mg KOH/g and a water content of 0.02% w/w. The transesterification process ends when 250 g of 2-ethylhexanol is recovered from the reaction solution.

A clear product with the characteristics described in Table 2 is obtained.

## Example 5

The flow reactor contains a heterophasic catalyst in the form of a strongly acidic ion exchange resin (Amberlyst A70). 372.0 g of dodecane-1-ol, 130.0 g of 2-ethylhexanol and 400.0 g of PEG 200 are loaded into the stirred reactor and the mechanical stirrer and jacket heating of the stirred tank reactor are started, the vacuum pump is activated, which produces a vacuum of 525 mmHg, a 15 °C water flow through the condenser is started and the bubbling of the reaction solution with nitrogen flow at 3 $Ndm^3/h$ is started. When the temperature of 60 °C is reached in the stirred tank reactor, 524.0 g of tris(2-ethylhexyl) citrate and 96.0 g of citric acid are dispensed. During the dosing of the remaining components of the reaction mixture, the electric heating of the distillation column and the jacket heating of the flow reactor are activated. After the whole ester and acid has been dispensed and completely dissolved and the temperature of reaction solution of 95 °C is reached, the distillation at pressure of 525 mmHg begins. The water and alcohol vapors leave the reactor and move to

distillation column. The vapors of azeotrophes and alcohols condense in the condenser and separator and are then directed to the separator. The dehydrated alcohols overflow from the separator is directed to the distillation column and the water is stored in a suitable operating tank. After stabilization of the distillation process, a circulation pump is started, which ensures a constant flow of the reaction mixture through the heterophasic catalyst bed in the amount of 7.5 $dm^3$/h and the esterification and transesterification processes are carried out while removing water and alcohol from the reaction zone. The reactor is maintained at the temperature of 95 °C, the speed of the stirrer is maintained in the range 19.0 rad/s, the pressure is maintained at a constant level of 500 mmHg, nitrogen flow is maintained at 3 $Ndm^3$/h. The condensed water and alcohol are collected in appropriate containers. After reaching a required concentration of water (0.04% w/w) and determination of the acid value (1.0 mg KOH/g), dosing of 20.0 g of 4.0% dioctyl tin oxide solution in 2-ethylhexanol begins. After the homophasic catalyst has been dispensed, the temperature of the reaction mixture is raised to 160 °C and the pressure is reduced to 250 mmHg. While the temperature of the reaction mixture is raised, 264.0 g of tris(2-ethylhexyl) citrate, 192.0 g of citric acid, 186.0 g of dodecane-1-ol and 200.0 g of PEG200 are dosed into the reaction system. The esterification process ends when the reaction solution reaches an acid value of 0.1 mg KOH/g and a water content of 0.02% w/w. The transesterification process ends when 130.0 g of 2-ethylhexanol is recovered from the reaction solution. At the time when the acid number of the reaction mixture reaches 0.1 mg KOH/g, it should be cooled. At 120 °C, 9.0 g of demineralized water is dosed into the stirred tank reactor to complete the synthesis of low and/or medium molecular polymer surfactants. When the post-reaction mixture is cooled to 75 °C, 9.0 g of the adsorbent mixture consisting of 2 g of activated carbon, 3 g of diatomaceous earth and 4 g of Amberlyst A26OH basic ion exchange resin is dosed. The contacting process is carried out for 6 hours at a temperature of 75 °C, under a nitrogen bubbling of 4 $dm^3$/h, maintaining an evenly suspended slurry in reactor working space. After the refining process of polymer surfactants, the product is filtered at 70 °C under a nitrogen pressure of 0.8 MPa.

A clear product with the characteristics described in Table 2 is obtained.

## Example 6

The synthesis of low- and/or medium molecular weight polymeric surfactants is carried out as in Example 5 except that Amberlyst A46 is used as heterophasic catalyst, and in the first stage 900.0 g D450 is used instead of PEG200, 74.0 g of butanol is used instead of dodecane-1-ol, 360.0 g of tri-n-butyl citrate is used instead of 260.0 g of tris(2-ethylhexyl) citrate, and zinc acetate is used as the homophasic catalyst. In the second stage, 130.0 g of 2-ethylhexanol is used instead of dodecane-1-ol. The esterification process ends when the reaction solution reaches an acid value of 0.2 mg KOH/g and a water content of 0.01% w/w. The transesterification process ends when 74.0 g of butanol is recovered from the reaction solution. A clear product with the characteristics described in Table 2 is obtained.

## Example 7

1.0 $dm^3$ of the heterophase catalyst in the form of a strongly acidic ion exchange resin (Amberlyst A46) is placed in a flow reactor. 775,0 g of PEG300 and 65.0 g of 2-ethylhexanol are loaded into the stirred tank reactor, the mechanical stirrer and jacket heating of the stirred tank are started, the vacuum pump is activated, which creates a vacuum of 400 mmHg, the 15 °C water flow through the condenser is activated and bubbling the reaction solution with nitrogen flow at a rate of 7 $Ndm^3$/h is activated. When the temperature in the stirred tank reactor reached 60 °C, 320.0 g of 2-ethylhexyl 2-ethylhexanoate and 144.0 g of 2-ethylhexanoic acid are dispensed. During the dosing of the remaining components of the reaction mixture, the electric heating of the distillation column and the jacket heating of the flow reactor are activated. After the whole ester and acid has been dispensed and completely dissolved and the temperature of reaction solution of 100 °C is reached, the distillation at pressure of 350 mmHg begins. The water and alcohol vapors leave the reactor and move to distillation column. The vapors of azeotrophes and alcohols condense in the condenser and separator and are then directed to the separator. The dehydrated alcohols overflow from the separator is directed to the distillation column and the water is stored in a suitable operating tank. After stabilization of the distillation process, a circulation pump is started, which ensures a constant flow of the reaction mixture through the heterophasic catalyst bed in the amount of 5,0 $dm^3$/h and the esterification and transesterification processes are carried out while removing water and alcohol from the reaction zone. The temperature of reactor is maintained at 100 °C, the speed of the stirrer is maintained in the range of 15.0 rad/s, the pressure is maintained at a constant level of 350 mmHg, nitrogen flow is maintained at 7 $Ndm^3$/h. The condensed water and alcohol are collected in appropriate containers. After reaching a required concentration of water (0.02% w/w) and determination of the acid value (0.5 mg KOH/g), dosing of 15.0 g of 5.0% dioctyl tin oxide solution in 2-ethylhexanol begins. After the homophasic catalyst has been dispensed, the temperature of the reaction mixture is raised to 180 °C and the pressure is reduced to 100 mmHg. While the temperature of the reaction mixture is raised, 166.0 g of terephthalic acid, 487.5 g of bis(2-ethylhexyl) terephthalate and 300.0 g of PEG300 are dosed into the reaction system. The transesterification process ends when 175.0 g of 2-ethylhexanol is recovered from the reaction solution. The esterification process ends when the reaction solution reaches an acid value of 0.1 mg KOH/g and a water content of 0.01% w/w. When the acid

number of the reaction mixture reaches 0.1 mg KOH/g, it is cooled. At 110 °C, 9.0 g of demineralised water is dispensed into the stirred tank reactor to complete the synthesis of low- and/or medium-molecular weight polymer surfactants. When the post-reaction mixture is cooled to 85 °C, 9.0 g of the adsorbent mixture consisting of 2.0 g of activated carbon, 3.0 g of diatomaceous earth, 3.0 g of basic Amberlyst A26OH ion exchange resin and 1.0 g of acidic ion exchange resin Amberylyst A45 is dosed. The contacting process is carried out for 4 hours at 85 °C under a nitrogen bubbling of 4 $dm^3$/h, maintaining an evenly suspended slurry in the reactor working space. After the refining process of polymer surfactants, the product is filtered at 90 °C under 1.2 MPa nitrogen pressure.

A clear product with the characteristics described in Table 2 is obtained.

## Example 8

The synthesis of low- and/or medium-molecular weight polymeric surfactants is carried out as in Example 7 except that in the first stage 750.0 g of G500 is used instead of PEG300, and tetra-n-butyl titanate is used as the homophasic catalyst, and in the second stage 166.0 g of terephthalic acid is used instead of succinic acid, 487.5 g of di(2-ethylhexyl)terephthalate is used, and low molecular weight polyester of polyterephthalate of ethylene glycol (PET) with average molecular weight $M_w$ = 1500 g/mol instead of PEG 300. The esterification process ends when the reaction solution reaches an acid value of 0.2 mg KOH/g and a water content of 0.01% w/w. The transesterification process ends when 160.0 g of 2-ethylhexanol is recovered from the reaction solution.

A clear product with the characteristics described in Table 2 is obtained.

Table 2. Characterization of low- and/or medium-molecular weight polymeric surfactants obtained in examples 1-8.

| No. | Average molecular weight ($M_w$), g/mol | HLB | Color on platinumcobalt scale, Hazen | Water content, % by weight | Acid value, mg KOH/g |
|---|---|---|---|---|---|
| Example 1 | 1238 | 16,4 | 50 | 0,01 | < 0,2 |
| Example 2 | 1666 | 17,0 | 48 | 0,01 | < 0,2 |
| Example 3 | 1744 | 15,8 | 39 | 0,02 | < 0,2 |
| Example 4 | 2546 | 14,7 | 55 | 0,01 | < 0,2 |
| Example 5 | 1212 | 10,7 | 60 | 0,03 | < 0,2 |
| Example 6 | 1576 | 4,0 | 46 | 0,03 | < 0,2 |
| Example 7 | 2307 | 8,12 | 35 | 0,02 | < 0,2 |
| Example 8 | 2101 | 4,7 | 38 | 0,02 | < 0,2 |

## Claims

1. A method for the preparation of low- and/or medium molecular weight polymeric surfactants with a defined hydrophilic-lipophilic balance (HLB index), based on the efficient use of esterification and/or transesterification of organic esters and/or organic acids with organic alcohols, **characterized by that** at least one organic ester AE1 and/or organic acid A1 is mixed at a temperature not lower than 60°C in a solution containing organic alcohols AL1, which contain no more than six hydroxyl groups in their structure, wherein the amount of organic esters AE1 is no more than 90% by weight and the amount of organic alcohols AL1 containing at least 2 hydroxyl groups is no more than 90% by weight, then the temperature of the reaction mixture is raised to not less than 100 °C and the reaction mixture is continuously contacted with a heterogeneous catalyst of an ion exchange type, where the esterification and/or transesterification process takes place and the water formed in the reaction is continuously removed until its concentration in the solution is no more than 0.05% by weight, then an organic tin compound and/or an organic titanium compound and/or an organic zinc compound is added to the reaction mixture as a catalyst for the esterification and/or transesterification reaction, and the temperature of the reaction mixture is increased to not less than 150 °C and the water formed in the reaction is continuously removed and/or alcohol in an amount of no more than 90% molar of the introduced alcohol in the structure of organic esters AE1, after which an organic ester BE1 and/or organic acid B1 and/or organic alcohol BL1 are loaded into the reaction mixture at a temperature not higher than 210 °C and an alcohol is continuously removed in an amount of no more than 90% molar of the alcohol introduced in the structure organic esters BE1 and/or water formed in the reaction is removed until the acid value of the reaction mixture reaches no more than 0.5 mg KOH/g, after which the reaction mixture is cooled and, at a temperature not higher than 150 °C, demineralized water is loaded into the system in an amount not higher than 0,5% by mass of the entire reaction mixture, after which obtained mixture of

low and medium-molecular surfactants is cooled to a temperature of not less than 60 °C and contacted with a mixture of adsorbents consisting of activated carbon and/or bentonite and/or diatomaceous earth and/or a cationic ion exchange resin and/or anionic ion exchange resin, after which the suspension is subjected to a filtration process.

**2.** Method according to claim 1, **characterized in that**:

- an organic tetravalent tin ($Sn^{4+}$) compound containing at least one alkoxy group ($R_1$-O-), wherein $R_1$ is an alkyl substituent containing from 4 to 8 carbon atoms, preferably 8 carbon atoms, or
- an organic titanium compound containing no more than four alkenyl groups ($R_1$-O-), wherein $R_1$ is an alkyl substituent containing from 3 to 4 carbon atoms, preferably 4 carbon atoms, or
- an organic divalent zinc compound ($Zn^{2+}$) containing at least one carboxyl group (-$OOR_1$), wherein $R_1$ is an alkyl substituent containing from 2 to 12 carbon atoms,

is used as a homogeneous catalyst for the esterification and/or transesterification reaction.

**3.** Method according to claim 1, **characterized in that** esters of aliphatic and/or aromatic and/or monohydroxyaliphatic acids containing no more than three carboxylic groups with alcohols containing only one hydroxyl group of the R-OH type are used as the organic esters AE1, wherein R is an alkyl substituent containing from 4 to 20 carbon atoms.

**4.** Method according to claim 1, **characterized in that** the aliphatic and/or aromatic and/or mono hydroxyaliphatic acids containing no more than three carboxylic groups (-CO-O-H) are used as the organic acids A1.

**5.** Method according to claim 1, **characterized in that** esters of aliphatic and/or aromatic acids containing no more than three carboxylic groups with alcohols containing only one hydroxyl group of the R-OH type are used as the organic esters BE1, wherein R is an alkyl substituent containing from 2 to 20 carbon atoms.

**6.** Method according to claim 1, **characterized in that** aliphatic and/or aromatic acids containing no more than three carboxylic groups are used as an organic acids B1.

**7.** Method according to claim 1, **characterized in that** the organic alcohols AL1 are mixed with organic esters AE1 in molar proportions of hydroxyl groups (-OH) to ester groups (-COO-C-) from 1:1 to 1:5, preferably from 1:2 to 1:4, and/or with organic acids in molar proportions of carboxylic groups (-CO-OH) to hydroxyl groups (-OH) from 1:2 to 1:6, preferably from 1:3 to 1:5.

**8.** Method according to claim 1, **characterized in that** the organic esters BE1 are added to the reaction mixture in an amount of no more than 2.5 moles per 1 mole of organic esters AE1.

**9.** Method according to claim 1, **characterized in that** at least one organic acid B1 and/or an organic alcohol BL1 in an amount of no more than 2.0 moles per 1 mole of organic esters of AE1 are added to the reaction mixture at a temperature not higher than 210 °C, preferably 160 °C to 190 °C.

**10.** Method according to claim 1, **characterized in that** water and/or alcohol(s) formed in the reaction are removed continuously from the reaction zone by distillation under reduced pressure and/or by distillation at normal pressure with nitrogen bubbling.

**11.** Method according to claim 1, **characterized in that** the demineralized water is added to the reaction mixture in an amount of no more than 0.50% w/w, at a temperature not higher than 210 °C, preferably from 120 °C to 180 °C.

## Patentansprüche

**1.** Verfahren zur Herstellung von polymeren Tensiden von niedrigem und/oder mittlerem Molekulargewicht mit einem definierten hydrophil-lipophilen Gleichgewicht (HLB-Wert), basierend auf der effizienten Nutzung der Veresterung und/oder Umesterung von organischen Estern und/oder organischen Säuren mit organischen Alkoholen, **dadurch gekennzeichnet, dass** mindestens ein organischer Ester AE1 und/oder eine organische Säure A1 bei einer Temperatur von nicht weniger als 60 °C in einer Lösung, enthaltend organische Alkohole AL1, die nicht mehr als sechs Hydroxylgruppen in ihrer Struktur enthalten, gemischt wird, wobei die Menge an organischen Estern AE1 nicht mehr als 90 Gew.-% beträgt und die Menge an organischen Alkoholen AL1, enthaltend mindestens 2 Hydroxylgruppen, nicht mehr als 90 Gew.-% beträgt, dann die Temperatur des Reaktionsgemisches auf nicht weniger als 100 °C erhöht wird und das Reaktionsgemisch kontinuierlich mit einem heterogenen Katalysator vom Ionenaustauschtyp in Kontakt gebracht wird, wo der Veresterungs- und/oder Umesterungsprozess stattfindet und das bei der Reaktion gebildete Wasser kontinuierlich entfernt wird, bis seine Konzentration in der Lösung nicht mehr als 0,05 Gew.-% beträgt, dann eine organische Zinnverbindung und/oder eine organische Titanverbindung und/oder eine organische Zinkverbindung als Katalysator für die Veresterungs- und/oder Umesterungsreaktion dem Reaktionsgemisch zugegeben wird, und die Temperatur des Reaktionsgemisches auf nicht weniger als 150 °C erhöht wird und das bei der Reaktion gebildete Wasser kontinuierlich entfernt wird und/oder Alkohol in einer Menge von nicht mehr als 90 Mol-% des eingeführten Alkohols in der Struktur organischer Ester AE1, woraufhin ein organischer Ester BE1 und/oder eine organische Säure B1 und/oder ein organischer Alkohol BL1 in das Reaktionsgemisch bei einer Temperatur von nicht mehr als 210 °C gegeben werden und ein Alkohol in einer Menge von nicht mehr als 90 Mol-% des in die Struktur organischer Ester BE1 eingeführten Alkohols kontinuierlich entfernt wird und/oder das bei der Reaktion gebildete Wasser entfernt wird, bis der Säurewert des Reaktionsgemisches nicht mehr als 0,5 mg KOH/g beträgt, woraufhin das Reaktionsgemisch abgekühlt wird und, bei einer Temperatur von nicht höher als 150 °C, demineralisiertes Wasser in einer Menge von nicht mehr als 0,5 Massen-% des gesamten Reaktionsgemisches in das System gegeben wird, woraufhin das erhaltene Gemisch aus niedermolekularen und mittelmolekularen Tensiden auf eine Temperatur von nicht weniger als 60 °C abgekühlt und mit einem Gemisch aus Adsorbentien, bestehend aus Aktivkohle und/oder Bentonit und/oder Diatomeenerde und/oder einem kationischen Ionenaustauscherharz und/oder einem anionischen Ionenaustauscherharz, in Kontakt gebracht wird, woraufhin die Suspension einem Filtrationsprozess unterzogen wird.

**2.** Verfahren nach Anspruch 1, **dadurch gekennzeichnet, dass:**

- eine organische vierwertige Zinnverbindung ($Sn^{4+}$), enthaltend mindestens eine Alkoxygruppe ($R_1$-O-), wobei $R_1$ ein von 4 bis 8 Kohlenstoffatome, vorzugsweise 8 Kohlenstoffatome, enthaltender Alkylsubstituent ist, oder
- eine organische Titanverbindung, enthaltend nicht mehr als vier Alkenylgruppen ($R_1$-O-), wobei $R_1$ ein von 3 bis 4 Kohlenstoffatome, vorzugsweise 4 Kohlenstoffatome, enthaltender Alkylsubstituent ist, oder
- eine organische zweiwertige Zinkverbindung ($Zn^{2+}$), enthaltend mindestens eine Carboxylgruppe (-OO$R_1$), wobei $R_1$ ein von 2 bis 12 Kohlenstoffatome enthaltender Alkylsubstituent ist, als homogener Katalysator für die Veresterungs- und/oder Umesterungsreaktion verwendet wird.

**3.** Verfahren nach Anspruch 1, **dadurch gekennzeichnet, dass** Ester von aliphatischen und/oder aromatischen und/oder Monohydroxy-aliphatischen Säuren, enthaltend nicht mehr als drei Carboxylgruppen, mit Alkoholen, enthaltend nur eine Hydroxylgruppe vom Typ R-OH, als organische Ester AE1 verwendet werden, wobei R ein von 4 bis 20 Kohlenstoffatome enthaltender Alkylsubstituent ist.

**4.** Verfahren nach Anspruch 1, **dadurch gekennzeichnet, dass** die aliphatischen und/oder aromatischen und/oder Monohydroxy-aliphatischen Säuren, enthaltend nicht mehr als drei Carboxylgruppen (-CO-O-H), als organische Säuren A1 verwendet werden.

**5.** Verfahren nach Anspruch 1, **dadurch gekennzeichnet, dass** Ester von aliphatischen und/oder aromatischen Säuren, enthaltend nicht mehr als drei Carboxylgruppen, mit Alkoholen, enthaltend nur eine Hydroxylgruppe vom Typ R-OH, als organische Ester BE1 verwendet werden, wobei R ein von 2 bis 20 Kohlenstoffatome enthaltender Alkylsubstituent ist.

**6.** Verfahren nach Anspruch 1, **dadurch gekennzeichnet, dass** aliphatische und/oder aromatische Säuren, enthaltend nicht mehr als drei Carboxylgruppen, als organische Säuren B1 verwendet werden.

**7.** Verfahren nach Anspruch 1, **dadurch gekennzeichnet, dass** die organischen Alkohole AL1 mit organischen Estern AE1 in molaren Verhältnissen von Hydroxylgruppen (-OH) zu Estergruppen (-CO-O-C-) von 1:1 bis 1:5, vorzugsweise von 1:2 bis 1:4, und/oder mit organischen Säuren in molaren Verhältnissen von Carboxylgruppen (-CO-OH) zu Estergruppen (-CO-O-C-) von 1:2 bis 1:6, vorzugsweise von 1:3 bis 1:5, gemischt werden.

**8.** Verfahren nach Anspruch 1, **dadurch gekennzeichnet, dass** die organischen Ester BE1 dem Reaktionsgemisch in einer Menge von nicht mehr als 2,5 Mol pro 1 Mol an organischen Estern AE1 zugegeben werden.

**9.** Verfahren nach Anspruch 1, **dadurch gekennzeichnet, dass** mindestens eine organische Säure B1 und/oder ein organischer Alkohol BL1 in einer Menge von nicht mehr als 2,0 Mol pro 1 Mol an organischen Estern von AE1 dem

Reaktionsgemisch bei einer Temperatur von nicht höher als 210 °C, vorzugsweise 160 °C bis 190 °C, zugegeben werden.

**10.** Verfahren nach Anspruch 1, **dadurch gekennzeichnet, dass** bei der Reaktion gebildetes Wasser und/oder gebildete(r) Alkohol(e) kontinuierlich aus der Reaktionszone durch Destillation unter vermindertem Druck und/oder durch Destillation bei Normaldruck unter Stickstoffeinperlung entfernt werden.

**11.** Verfahren nach Anspruch 1, **dadurch gekennzeichnet, dass** das demineralisierte Wasser dem Reaktionsgemisch in einer Menge von nicht mehr als 0,50 Gew.-%, bei einer Temperatur von nicht höher als 210 °C, vorzugsweise von 120 °C bis 180 °C, zugegeben wird.

**Revendications**

**1.** Procédé de préparation de tensioactifs polymères de poids moléculaire faible et/ou moyen avec un équilibre hydrophile-lipophile défini (indice HLB), basé sur l'utilisation efficace de l'estérification et/ou de la transestérification d'esters organiques et/ou d'acides organiques avec des alcools organiques, **caractérisé en ce qu'**au moins un ester organique AE1 et/ou un acide organique A1 sont mélangés à une température non inférieure à 60°C dans une solution contenant des alcools organiques AL1, qui ne contiennent pas plus de six groupes hydroxyles dans leur structure, dans laquelle la quantité d'esters organiques AE1 n'est pas supérieure à 90% en poids et la quantité d'alcools organiques AL1 contenant au moins 2 groupes hydroxyles n'est pas supérieure à 90% en poids, puis la température du mélange réactionnel est élevée à au moins 100°C et le mélange réactionnel est mis en contact en continu avec un catalyseur hétérogène de type échangeur d'ions, où le processus d'estérification et/ou de transestérification a lieu et l'eau formée dans la réaction est éliminée en continu jusqu'à ce que sa concentration dans la solution ne dépasse pas 0,05% en poids, puis un composé organique d'étain et/ou un composé organique de titane et/ou un composé organique de zinc est ajouté au mélange réactionnel comme catalyseur pour la réaction d'estérification et/ou de transestérification, et la température du mélange réactionnel est augmentée à au moins 150°C et l'eau formée dans la réaction est éliminée en continu et/ou l'alcool dans une quantité ne dépassant pas 90% molaire de l'alcool introduit dans la structure des esters organiques AE1, après quoi un ester organique BE1 et/ou un acide organique Bl et/ou un alcool organique BL1 sont chargés dans le mélange réactionnel à une température ne dépassant pas 210°C et un alcool est éliminé en continu dans une quantité ne dépassant pas 90% molaire de l'alcool introduit dans la structure des esters organiques BE1 et/ou l'eau formée dans la réaction est éliminée jusqu'à ce que l'indice d'acide du mélange réactionnel n'atteigne pas plus de 0,5 mg KOH/g, après quoi le mélange réactionnel est refroidi et, à une température ne dépassant pas 150°C, l'eau déminéralisée est chargée dans le système en une quantité ne dépassant pas 0,5% en masse de l'ensemble du mélange réactionnel, après quoi le mélange obtenu de tensioactifs de faible et moyenne masse moléculaire est refroidi à une température d'au moins 60°C et mis en contact avec un mélange d'adsorbants constitué de charbon actif et/ou de bentonite et/ou de terre de diatomées et/ou d'une résine échangeuse d'ions cationique et/ou d'une résine échangeuse d'ions anionique, aaprès quoi la suspension est soumise à un processus de filtration.

**2.** Procédé selon la revendication 1, **caractérisé en ce que** :

- un composé organique d'étain tétravalent ($Sn^{4+}$) contenant au moins un groupe alcoxy ($R_1$-O-), dans lequel $R_1$ est un substituant alkyle contenant de 4 à 8 atomes de carbone, de préférence 8 atomes de carbone, ou
- un composé organique du titane ne contenant pas plus de quatre groupes alcényle ($R_1$-O-), $R_1$ étant un substituant alkyle contenant de 3 à 4 atomes de carbone, de préférence 4 atomes de carbone, ou
- un composé organique de zinc divalent ($Zn^{2+}$) contenant au moins un groupe carboxyle (-OO$R_1$), $R_1$ étant un substituant alkyle contenant de 2 à 12 atomes de carbone, est utilisé comme catalyseur homogène pour la réaction d'estérification et/ou de transestérification.

**3.** Procédé selon la revendication 1, **caractérisé en ce que** les esters d'acides aliphatiques et/ou aromatiques et/ou monohydroxyaliphatiques ne contenant pas plus de trois groupes carboxyliques avec des alcools ne contenant qu'un seul groupe hydroxyle de type R-OH sont utilisés comme esters organiques AE1, dans lequel R est un substituant alkyle contenant de 4 à 20 atomes de carbone.

**4.** Procédé selon la revendication 1, **caractérisé en ce que** comme acides organiques A1 on utilise les acides aliphatiques et/ou aromatiques et/ou mono hydroxyaliphatiques ne contenant pas plus de trois groupes carboxyliques (-CO-O-H).

5. Procédé selon la revendication 1, **caractérisé en ce que** comme esters organiques BE1, on utilise des esters d'acides aliphatiques et/ou aromatiques ne contenant pas plus de trois groupes carboxyliques avec des alcools ne contenant qu'un seul groupe hydroxyle de type R-OH, R étant un substituant alkyle contenant de 2 à 20 atomes de carbone.

6. Procédé selon la revendication 1, **caractérisé en ce que** comme acides organiques B1, on utilise des acides aliphatiques et/ou aromatiques ne contenant pas plus de trois groupes carboxyliques.

7. Procédé selon la revendication 1, **caractérisé en ce que** les alcools organiques AL1 sont mélangés avec des esters organiques AE1 dans des proportions molaires de groupes hydroxyles (-OH) sur groupes esters (-CO-O-C-) de 1:1 à 1:5, de préférence de 1:2 à 1:4, et/ou avec des acides organiques dans des proportions molaires de groupes carboxyliques (-CO-OH) sur groupes hydroxyles (-OH) de 1:2 à 1:6, de préférence de 1:3 à 1:5.

8. Procédé selon la revendication 1, **caractérisé en ce que** les esters organiques BE1 sont ajoutés au mélange réactionnel en une quantité ne dépassant pas 2,5 moles pour 1 mole d'esters organiques AE1.

9. Procédé selon la revendication 1, **caractérisé en ce qu'**au moins un acide organique B1 et/ou un alcool organique BL1 en une quantité ne dépassant pas 2,0 moles pour 1 mole d'esters organiques de AE1 sont ajoutés au mélange réactionnel à une température ne dépassant pas 210°C, de préférence de 160°C à 190°C.

10. Procédé selon la revendication 1, **caractérisé en ce que** l'eau et/ou l'alcool(s) formé(s) dans la réaction sont éliminés en continu de la zone réactionnelle par distillation sous pression réduite et/ou par distillation à pression normale avec barbotage d'azote.

11. Procédé selon la revendication 1, **caractérisé en ce que** l'eau déminéralisée est ajoutée au mélange réactionnel en une quantité ne dépassant pas 0,50% p/p, à une température ne dépassant pas 210°C, de préférence de 120°C à 180°C.

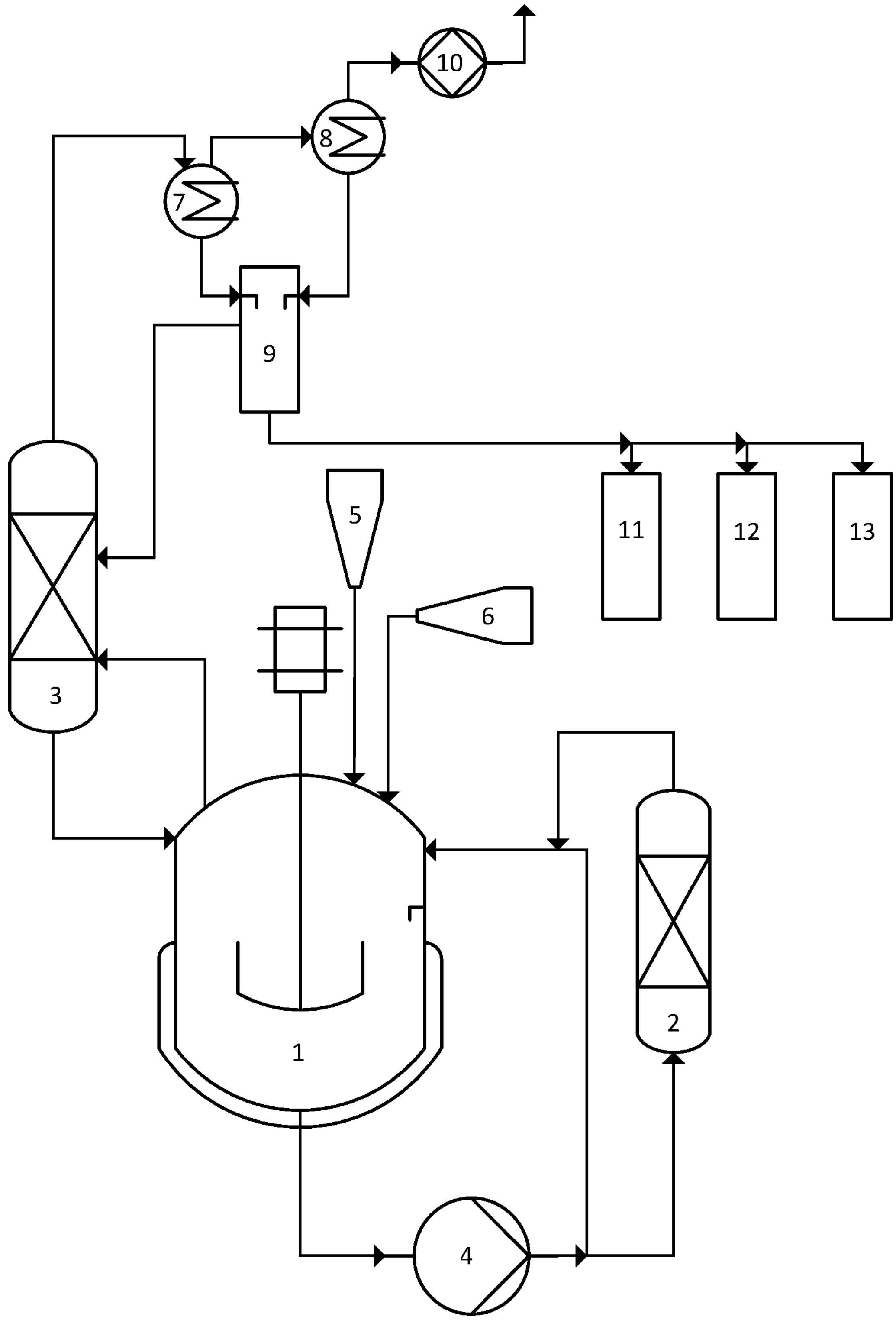


Fig. 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 7893189 B
- US 4268410 A
- US 5319006 A
- US 5436314 A
- US 5612444 A
- EP 1217022 B1
- US 5145883 A
- PL 216179
- PL 220664
- PL 220664 B1
- PL 416232 A1